# FASCICULE DE BREVET EUROPEEN

(11) **EP 2 677 862 B1**
(45) Date de publication et mention de la délivrance du brevet: **08.04.2020**
(21) Numéro de dépôt: 12712738.9
(22) Date de dépôt: 21.02.2012
(51) Int. Cl.: A01M 25/00

(54) **POSTE D'APPATAGE POUR RONGEURS**
STATION ZUM KÖDERN VON NAGETIEREN
RODENT BAITING STATION

(30) Priorité: 22.02.2011 FR 1151441
(43) Date de publication de la demande: 01.01.2014
(73) Titulaire: Dakem, 92400 Courbevoie (FR)
(72) Inventeur: ESCULIER, Marc, 92200 Neuilly Sur Seine (FR)
(74) Mandataire: Nony
(86) Numéro de dépôt international: PCT/IB2012/050775
(87) Numéro de publication internationale: WO 2012/114263

(56) Documents cités:
- WO-A1-94/06286
- WO-A1-98/10645
- WO-A1-99/03340
- WO-A1-99/63812
- WO-A1-2004/098281
- US-A- 3 352 053
- US-B1- 6 389 738

## Description

La présente invention concerne le domaine du traitement des nuisibles. Plus particulièrement, l'invention concerne la capture et l'élimination des rongeurs.

Une première solution courante pour éliminer les rongeurs est d'utiliser des appâts empoisonnés. Dans ce type d'utilisation, il faut donc à la fois attirer les rongeurs, faciliter leur accès à l'appât et garantir la sécurité des locaux traités en particulier en empêchant l'accès au poison des enfants et des animaux domestiques.

Le document WO 99/03340 porte sur un poste d'appâtage prenant la forme d'une boîte comportant une paroi amovible derrière laquelle un appât peut être placé.

Les documents FR 2 849 746 et US 2009/0307963 enseignent des broches ou des tiges pour maintenir l'appât à l'intérieur d'un poste d'appâtage. Ces tiges rendent les postes complexes à fabriquer et peuvent s'avérer fragiles au niveau de la maintenance.

Le document WO 2009/157027 enseigne un dispositif d'appâtage sécurisé à usage unique contenant une quantité prédéterminée d'appât empoisonné. Cependant ces pièges à usage unique créent un volume important de déchets potentiellement dangereux et/ou polluants, en particulier à cause des résidus d'appâts empoisonnés, qui ne peuvent pas toujours être éliminés par les canaux habituels d'enlèvement des ordures.

Les postes d'appâtage pour les rongeurs, se présentent en général sous la forme de boites équipées d'un couvercle qui se ferment avec une sécurité d'ouverture, comportant une ouverture d'accès pour les rongeurs et une partie intérieure séparée pour recevoir un appât. Les documents WO 2005/006857 et EP 0 999 742 décrivent par exemple des postes d'appâtage comportant des cloisons internes qui séparent l'appât empoisonné de l'entrée du piège. La demande WO 94/06286 et le brevet US 3 352 053 décrivent des postes d'appâtage pliables. Le brevet US 6 389 738 a pour objet un piège pour nuisibles comportant une base et un couvercle aptes à prendre deux configurations suivant que le piège est utilisé pour des rongeurs ou pour des insectes.

Depuis plusieurs années, le contrôle des populations invasives de rongeurs se fait également en positionnant sur les points de passage des rongeurs, des pièges qui permettent de les capturer. Les documents WO 98/10645, WO 99/63812 et WO 2004/098281 divulguent des dispositifs d'élimination des rongeurs pouvant être équipés d'un réceptacle amovible destiné à recevoir un appât empoisonné ou d'un piège pour emprisonner l'animal. Il existe encore un besoin pour améliorer les dispositifs d'élimination des rongeurs nuisibles existants.

La présente invention a ainsi pour objectif de procurer un poste d'appâtage facile à fabriquer et à manipuler, tout en étant efficace et sûr.

L'invention a pour objet un poste d'appâtage pour rongeurs selon la revendication 1 comportant,
- une boite, notamment en plastique, définissant un volume interne et comportant une cloison interne, mobile entre une première et une deuxième positions et séparant le volume interne en deux lorsqu'elle est dans la première position, et ladite boite comportant au moins une ouverture,
- un couvercle,
- un système de sécurité d'ouverture,
caractérisé par le fait que les première et deuxième positions de la cloison interne correspondent à différents modes d'utilisation dudit poste d'appâtage pour rongeurs, et par le fait que la cloison est découpée dans le fond de la boite et constitue le fond de la boite dans ladite deuxième position.

Les première et deuxième positions peuvent ainsi correspondre à différents modes d'utilisation dudit poste d'appâtage pour rongeurs.

Dans sa première position la cloison mobile crée le cloisonnement nécessaire pour placer un appât en empêchant cet appât de se disperser ou d'être atteint par exemple par la main d'un enfant. Le poste d'appâtage est donc sécurisé.

Dans sa première position la cloison est par exemple verticale.

La cloison peut pivoter autour d'une charnière et/ou être amovible.

Le poste d'appâtage peut comporter un système de clipsage configuré pour maintenir la cloison dans sa première position. En variante, la cloison peut se fixer en première position par tout moyen approprié. Dans une variante de réalisation la cloison est amovible et peut se glisser partiellement dans des guides situés à l'intérieur de la boite pour être maintenue dans sa première position.

Lorsque la cloison est dans sa deuxième position, rabattue sur le fond, le poste permet de mettre en place un piège notamment agencé pour maintenir prisonnier le rongeur, tout en conservant les volumes externes du poste, ce qui est primordial pour la mise en place dans les différentes configurations des lieux de traitement.

Le piège est par exemple un piège à glu ou un piège mécanique notamment comportant des mâchoires qui se referment sur le rongeur, en particulier sur sa tête. On a ainsi le choix entre deux variantes de mises en oeuvre : l'invention présente permet de pouvoir placer des pièges à glu dans les postes d'appâtage et autorise également d'utiliser le cloisonnement interne du poste pour placer un appât comme décrit ci-dessus.

Le poste d'appâtage peut comporter en outre un piège agencé pour maintenir prisonnier le rongeur, notamment un piège à glu ou un piège mécanique positionnable sur ladite cloison dans sa deuxième position.

Le poste d'appâtage comporte de préférence au moins deux ouvertures définissant les extrémités d'un tunnel s'étendant sur la longueur de la boîte, ce qui facilite l'entrée et inquiète moins le rongeur qu'une ouverture unique.

Le poste d'appâtage peut être empilable notamment avec d'autres postes du même type lorsque la cloison est dans la deuxième position. Cette possibilité d'empiler les postes facilite grandement leur transport et leur mise en œuvre sur les chantiers par les techniciens.

Le poste d'appâtage peut comporter en outre des moyens de fixation sur un support, notamment des trous pour le passage d'éléments de fixation.

L'ouverture ou l'une des ouvertures est de préférence adjacente à un côté de la boîte qui comporte des épaulements extérieurs configurés pour maintenir en position stable la boîte posée sur ledit côté. Un tel poste peut être utilisé dans deux positions différentes : horizontalement sur le fond de la boite ou verticalement posé sur un coté, ce qui facilite son placement dans des endroits exigus.

L'invention pourra être mieux comprise à la lecture de la description détaillée qui va suivre, d'exemples de mise en œuvre non limitatifs de celle-ci, et à l'examen du dessin annexé, sur lequel :
- la figure 1 représente en perspective un mode de réalisation de l'invention dans une première position,
- la figure 2 représente en perspective ce mode de réalisation de l'invention dans une deuxième position,
- la figure 3 représente la boîte d'une variante de poste selon l'invention,
- la figure 4 illustre en perspective une vue de dessous d'une boite d'un poste d'appâtage selon l'invention, et
- la figure 5 illustre en perspective une variante de poste selon l'invention.

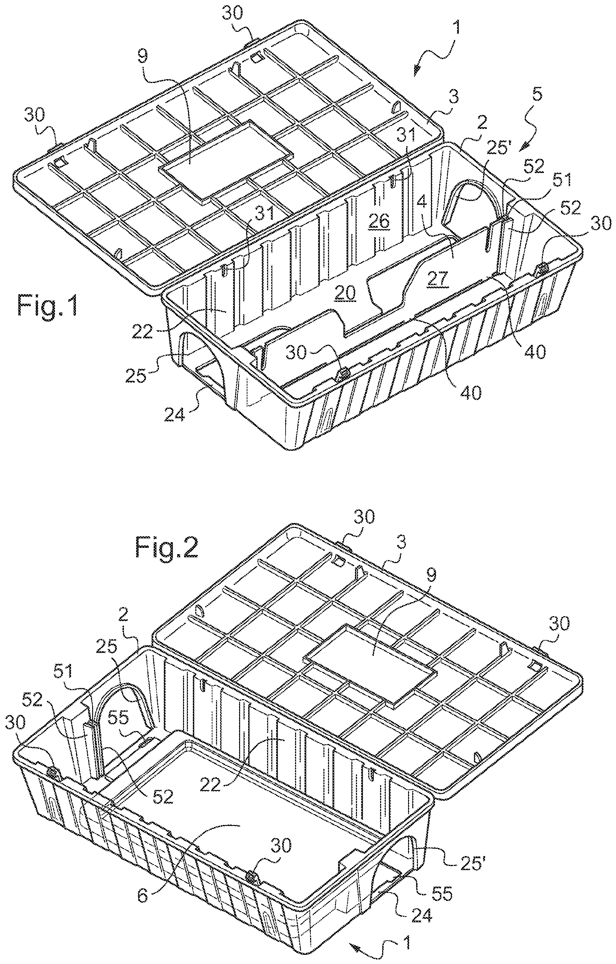

Le poste d'appâtage 1 pour rongeurs illustré à la figure 1, se présente sous la forme d'une boite 2 en plastique équipée d'un couvercle 3 qui se ferme avec une sécurité d'ouverture 30. Dans l'exemple illustré, le système de sécurité d'ouverture 30 est constitué de languettes avec ergots pouvant s'insérer dans des logements correspondants. Tout moyen de fermeture sécurisé connu de l'homme du métier, par exemple comportant des clefs, des clips ou des agraphes peut être utilisé.

Le couvercle dans l'exemple illustré est maintenu solidaire de la boîte par une charnière 31. On ne sort pas du cadre de l'invention dans le cas d'un couvercle totalement amovible apte à être refermé de manière sécurisée.

Le poste 1 est présenté ouvert. La cloison 4, découpée dans le fond 24 de la boite, est maintenue en position verticale par un système de clipsage (5) comportant des onglets de fixation 55 glissés à l'intérieur de deux fentes 51, chacune entre deux montants 52 qui peuvent être rapportés sur la boîte 2 comme illustrés, ou moulés avec la boite.

La cloison sépare l'espace intérieur 20 de la boîte 2 en un tunnel 26 et un espace 27 dans lequel un appât pour rongeur peut être déposé tout en étant inaccessible par une personne ou un animal situé à l'extérieur de la boite une fois le couvercle 3 fermé et sécurisé.

On pourrait utiliser tout autre moyen de fixation connu de l'homme du métier permettant de maintenir la cloison 4 en position verticale.

Le poste d'appâtage 1 illustré comporte en outre une zone de marquage 9 qui peut en particulier d'être utilisée par le fabriquant pour apposer des données techniques, commerciales ou des informations de sécurité. Cette zone peut également être utilisée par l'utilisateur final, par exemple pour indiquer la dernière date de remplacement de l'appât ou par un organisme d'inspection sanitaire.

Une fois la cloison 4 rabattue dans la découpe du fond 24 en sa deuxième position le poste 1 est empilable avec des postes similaires.

Dans une variante non illustrée, des languettes moulées par injection constituent les charnières 31 du couvercle et 40 de la cloison. Les montants de fixation de la cloison en sa deuxième position peuvent être en également moulés avec le reste du poste. Un tel mode de réalisation est particulièrement facile et économique à fabriquer en une seule opération par moulage, notamment par injection d'une matière thermoplastique. Il est également pratique à conditionner, par exemple sous forme de lots de plusieurs postes empilés, à transporter et à installer.

Sur la figure 2, on a représenté un autre mode d'utilisation du poste d'appâtage de la figure 1. La cloison 4 est ici dans sa deuxième position, rabattue sur le fond 24 de la boîte 2, fond sur lequel on a mis en place un piège à glu 6.

Les postes d'appâtage peuvent comporter un piège à glu ou de tels pièges à glu peuvent être vendus et livrés séparément notamment par lots.

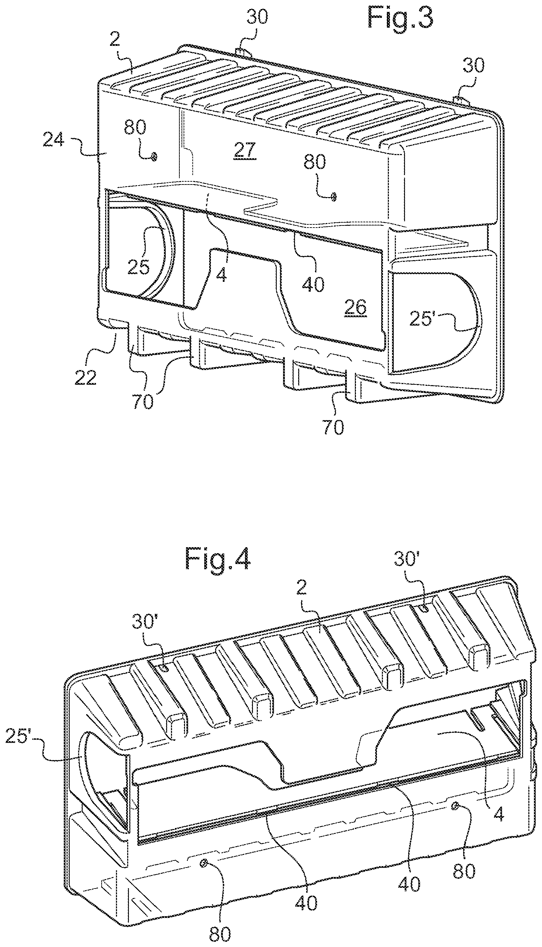

Seule la boite 2 d'un poste d'appâtage 1 est représentée sur la figure 3. Le tunnel d'accès 26, situé entre les ouvertures 25 et 25' est délimité d'une part par la cloison mobile 4 d'autre part par un côté 22 de la boîte 2 qui comporte dans ce mode de réalisation des épaulements extérieurs 70. La boîte 2 est posée sur le côté 22 et maintenue verticale par les épaulements 70. La présence des épaulements permet donc de choisir entre le positionnement vertical illustré et un positionnement horizontal sur le fond 24 similaire à celui illustré figures 1 et 2. Cette double possibilité peut être particulièrement intéressante en fonction du lieu on veut mettre le poste, notamment pour placer les pièges sur des lieux de passages favoris des rongeurs qui peuvent être particulièrement étroits, par exemple derrière des machines, ou dans des gaines techniques plus étroites que hautes.

Il peut être nécessaire de sécuriser le positionnement du poste d'appâtage pour éviter par exemple qu'un enfant n'emporte le piège ou qu'un rongeur prisonnier à l'intérieur ne déplace le poste par des mouvements désordonnés. Le poste dont la boîte est illustrée figure 4 comporte des trous de fixation 80. Ces moyens de fixation 8 sont agencés pour permettre la fixation du poste d'appâtage sur un support, par exemple le sol ou un mur, sans entraver l'ouverture ni la fermeture du couvercle 3 et permettant ainsi , sans déplacer le poste de recharger l'appât ou bien changer de mode d'utilisation en passant du mode "appât empoisonné" au mode "piège à glu", ou au mode « piège mécanique ».

Dans cet exemple, le système de sécurité d'ouverture 30' comporte des passages de câble, une fois la boîte fermée, le couvercle est maintenu en place à l'aide de colliers, par exemple à usage unique, passés dans ces passages de câble.

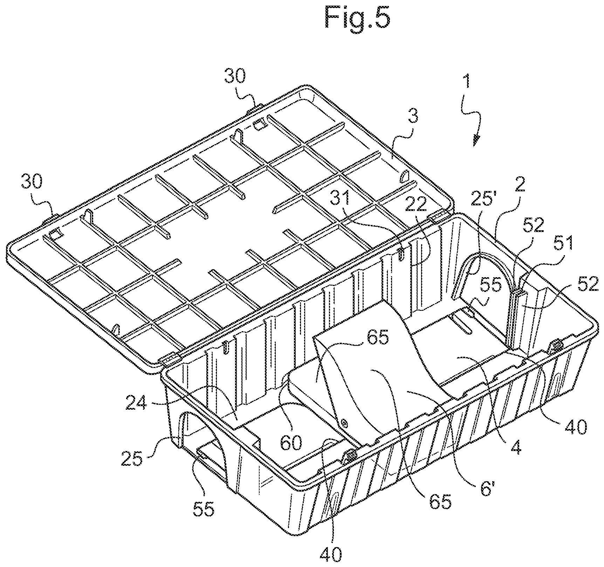

La variante de poste d'appâtage 1 illustrée à la figure 5 en position ouverte, dans sa deuxième position avec la paroi 4 rabattue dans la découpe du fond 24, comporte en outre un piège mécanique 6' muni de deux mâchoires 65 aptes à se refermer sur la tête du rongeur.

De tels pièges sont bien connus de l'homme du métier. Le poste d'appâtage peut être utilisé avec des pièges mécaniques commercialisés par ailleurs et ne nécessite pas d'avoir des pièges spécialement adaptés.

Lorsque l'on souhaite utiliser des pièges tels des pièges à glu ou des pièges mécaniques pour éliminer les rongeurs, le poste selon l'invention offre une solution et plus hygiénique qu'un piège laissé à l'air libre et facilite également l'enlèvement des rongeurs piégés.

L'exemple de réalisation illustré comporte en outre, de façon optionnelle, un dégagement 60 dans la partie inférieure de la paroi 22 facilitant la mise en place et le maintien du piège 6'. Le poste selon l'invention peut ainsi comporter un ou plusieurs dégagements par exemple en partie inférieure de parois opposées de la boîte 2.

Les postes illustrés sont réalisés par moulage de matière thermoplastique. On ne sort pas de la présente invention en utilisant un poste fabriqué autrement.

Dans leur deuxième position, les postes illustrés sont utilisés avec un piège à glu ou un piège mécanique muni de mâchoires, on ne sort pas de la présente invention en utilisant un poste avec un piège d'un type différent.

## Revendications

1. Poste d'appâtage (1) pour rongeurs comportant :
- une boite (2), notamment en plastique, définissant un volume interne (20) et comportant une cloison interne (4), mobile entre une première et une deuxième positions et séparant le volume interne (20) en deux lorsqu'elle est dans la première position et ladite boite comportant au moins une ouverture (25, 25'),
- un couvercle (3),
- un système de sécurité d'ouverture (30, 30'),
**caractérisé par le fait que** les première et deuxième positions de la cloison interne (4) correspondent à différents modes d'utilisation dudit poste d'appâtage pour rongeurs,
et **par le fait que** la cloison (4) est découpée dans le fond (24) de la boite (2) et constitue le fond de la boite dans ladite deuxième position.

2. Poste d'appâtage selon la revendication 1, **caractérisé par le fait que** la boite (2) comporte au moins deux ouvertures (25, 25') définissant les extrémités d'un tunnel (26) s'étendant sur la longueur de la boîte.

3. Poste d'appâtage selon l'une quelconque des revendications précédentes, **caractérisé par le fait que** comporte un système de clipsage (5) configuré pour maintenir la cloison (4) dans sa première position.

4. Poste d'appâtage selon l'une quelconque des revendications précédentes, **caractérisé par le fait que** la cloison (4) pivote autour d'une charnière (40).

5. Poste d'appâtage selon l'une quelconque des revendications précédentes, **caractérisé par le fait que** la cloison (4) est amovible.

6. Poste d'appâtage selon l'une quelconque des revendications précédentes, **caractérisé par le fait qu'**il est empilable lorsque ladite cloison est dans la deuxième position.

7. Poste d'appâtage selon l'une quelconque des revendications précédentes, **caractérisé par le fait que** l'ouverture (25) est adjacente à un côté (22) de la boîte (2) qui comporte des épaulements extérieurs (70) configurés pour maintenir en position stable la boîte posée sur ledit côté.

8. Poste d'appâtage selon l'une quelconque des revendications précédentes **caractérisé par le fait qu'**il comporte en outre des moyens de fixation (8) sur un support, notamment des trous de fixation (80).

9. Poste d'appâtage selon l'une quelconque des revendications précédentes **caractérisé par le fait qu'**il comporte en outre un piège agencé pour maintenir prisonnier le rongeur, notamment un piège à glu (6) ou un piège mécanique (6') positionnable sur ladite cloison dans sa deuxième position.

## Patentansprüche

1. Köderstation (1) für Nagetiere, die aufweist:
- eine Kiste (2), insbesondere aus Kunststoff, die ein Innenvolumen (20) definiert und eine innere Trennwand (4) aufweist, die zwischen einer ersten und einer zweiten Stellung beweglich ist und das Innenvolumen (20) in zwei Hälften teilt, wenn sie in der ersten Stellung ist, und die Kiste mindestens eine Öffnung (25, 25') aufweist,
- einen Deckel (3),
- ein Öffnungssicherheitssystem (30, 30'),
**dadurch gekennzeichnet, dass** die erste und die zweite Stellung der inneren Trennwand (4) verschiedenen Nutzungsarten der Köderstation für Nagetiere entsprechen,
und dass die Trennwand (4) im Boden (24) der Kiste (2) ausgeschnitten ist und in der zweiten Stellung den Boden der Kiste bildet.

2. Köderstation nach Anspruch 1, **dadurch gekennzeichnet, dass** die Kiste (2) mindestens zwei Öffnungen (25, 25') aufweist, die die Enden eines Tunnels (26) definieren, der sich über die Länge der Kiste erstreckt.

3. Köderstation nach einem der vorhergehenden Ansprüche, **dadurch gekennzeichnet, dass** sie ein Einrastsystem (5) aufweist, das konfiguriert ist, die Trennwand (4) in ihrer ersten Stellung zu halten.

4. Köderstation nach einem der vorhergehenden Ansprüche, **dadurch gekennzeichnet, dass** die Trennwand (4) um ein Scharnier (40) schwenkt.

5. Köderstation nach einem der vorhergehenden Ansprüche, **dadurch gekennzeichnet, dass** die Trennwand (4) entfernbar ist.

6. Köderstation nach einem der vorhergehenden Ansprüche, **dadurch gekennzeichnet, dass** sie stapelbar ist, wenn die Trennwand in der zweiten Stellung ist.

7. Köderstation nach einem der vorhergehenden Ansprüche, **dadurch gekennzeichnet, dass** die Öffnung (25) einer Seite (22) der Kiste (2) benachbart ist, die äußere Schultern (70) aufweist, die konfiguriert sind, die auf diese Seite gelegte Kiste in einer stabilen Stellung zu halten.

8. Köderstation nach einem der vorhergehenden Ansprüche, **dadurch gekennzeichnet, dass** sie außerdem Befestigungseinrichtungen (8) auf einem Träger aufweist, insbesondere Befestigungslöcher (80) .

9. Köderstation nach einem der vorhergehenden Ansprüche, **dadurch gekennzeichnet, dass** sie außerdem eine Falle aufweist, die eingerichtet ist, um das Nagetier gefangen zu halten, insbesondere eine Leimfalle (6) oder eine mechanische Falle (6'), die auf der Trennwand in ihrer zweiten Stellung positioniert werden kann.

## Claims

1. A baiting station (1) for rodents, having:
- a box (2), in particular made from plastic, defining an internal space (20) and having an internal partition (4), which can move between a first and a second position and separates the internal space (20) into two parts when it is in the first position, and the box comprising at least one opening (25, 25'),
- a lid (3),
- a safety lock system (30, 30'),
**characterized in that** the first and second positions of the internal partition (4) correspond to different modes of use of said baiting station for rodents and **in that** the partition (4) is cut out from the base (24) of the box (2) and forms the base of the box in said second position.

2. The baiting station as claimed in claim 1, **characterized in that** the box (2) has at least two openings (25, 25') defining the ends of a tunnel (26) that extends over the length of the box.

3. The baiting station as claimed in any of the preceding claims, **characterized in that** it has a clip-fastening system (5) designed to hold the partition (4) in its first position

4. The baiting station as claimed in any of the preceding claims, **characterized in that** the partition (4) pivots about a hinge (40).

5. The baiting station as claimed in any of the preceding claims, **characterized in that** the partition (4) is removable.

6. The baiting station as claimed in any of the preceding claims, **characterized in that** it can be stacked when said partition is in the second position.

7. The baiting station as claimed in any of the preceding claims, **characterized in that** the opening (25) is adjacent to a side (22) of the box (2) which has external shoulders (70) designed to hold the box standing on said side in a stable position.

8. The baiting station as claimed in any of the preceding claims, **characterized in that** it also has means (8) for fastening to a support, in particular fastening holes (80).

9. The baiting station as claimed in any of the preceding claims, **characterized in that** it also has a trap arranged so as to hold the rodent captive, in particular a glue trap (6) or a mechanical trap (6') which can be positioned on said partition in its second position.
